# EUROPÄISCHE PATENTSCHRIFT

(11) **EP 2 856 874 B1**
(45) Veröffentlichungstag und Bekanntmachung des Hinweises auf die Patenterteilung: **09.06.2021**
(21) Anmeldenummer: 13004766.5
(22) Anmeldetag: 02.10.2013
(51) Int. Cl.: A01P 1/00, A01N 59/06, A01N 25/04, A01N 25/24

(54) **Wässrige Suspensionen, Verfahren zur Behandlung von pflanzlichen Abschlussgeweben gegen biotische Schaderreger und wässrige Suspensionen zur Verwendung zur Behandlung von Klauenerkrankungen, insbesondere Panaritium, Montellaro und Dermatitis bei Nutztieren.**
Aqueous suspensions, method for the treatment of vegetal epidermal tissues against biotic diseases and aqueous suspensions for use in a method of treatment of claw diseases, such as Panaritium, Montellaro and Dermatitis in domestic animals.
Suspensions aqueuses, procédé de traitement de tissus occlusifs végétaux contre les parasites biotiques et suspensions aqueuses pour une utilisation dans une méthode de traitement des maladies des griffes, telles que Panaritium, Montellaro et Dermatitis chez les animaux domestiques.

(43) Veröffentlichungstag der Anmeldung: 08.04.2015
(73) Patentinhaber: Klose GmbH, 56626 Andernach (DE); Landhandel Ralf Kohaupt, 79848 Bonndorf (DE)
(72) Erfinder: Kohaupt, Ralf, 79848 Bonndorf (DE); Klose, Siegfried, 56626 Andernach (DE)
(74) Vertreter: Patentanwälte Dr. Keller, Schwertfeger Partnerschaft mbB

(56) Entgegenhaltungen:
- WO-A1-2009/064450
- WO-A1-2010/044194
- DE-U1-202006 002 479

## Beschreibung

Die vorliegende Erfindung betrifft eine wässrige Suspension zur Behandlung von pflanzlichen oder tierischen Abschlussgeweben gegen biotische Schaderreger wie Pilze, Bakterien, Viren und deren Verwendung zur Vorbeugung oder Behandlung von Pflanzenkrankheiten oder Klauenerkrankungen bei Huftieren. Ferner betrifft die Erfindung ein Verfahren zur Erhöhung der Widerstandskraft von Pflanzen, insbesondere von Nutz- oder Zierpflanzen gegenüber biotischen Schaderregern wie Pilzen, Bakterien oder Viren.

Alkalisch wirksame Verbindungen wie Calciumcarbonat, Calciumhydroxid bzw. Magnesiumcarbonat, Magnesiumhydroxid werden häufig zusammen mit Zusatzstoffen bei Pflanzen oder Tieren eingesetzt, um Infektionen mit biotischen Schaderregern zu verhindern. Daneben kommen Zusammensetzungen aus Elementarschwefel, Kupfersulfat, gelöster Kieselsäure oder Mischungen dieser Stoffe zum Einsatz. Beispielsweise wird in der DE 101 57 350 A1 eine Wirkstoffzusammensetzung bzw. ein Pflanzenbehandlungsmittel beschrieben, das mit Pflanzenerde homogen vermischt wird. Die Zusammensetzung besteht aus einem wasserabsorbierenden Polymer, das durch einen Vernetzer vernetzt ist.

In der DE 20 2012 001 243 U1 ist ein Düngemittel-Agglomerat beschrieben, das aus faseriger und/oder pulverförmiger Zellulose und/oder deren Derivaten, wenigstens einer mineralischen, pulverförmigen Substanz, wenigstens einem Spurenelement und einem natürlichen Bindemittel besteht. Als mineralische Substanz und Bindemittel wird beispielsweise Calciumoxid eingesetzt.

In der WO 2010/044194 A1 wird eine alkalische Reinigungslösung beschrieben, die eine bakterizide Wirkung aufweist. Diese besteht aus einer gesättigten wässrigen Lösung aus CaO (Calciumoxid), das durch Verbrennung von Muschelschalen gewonnen wurde. Dabei soll ein Ausfall von CaCO₃ verringert oder vermieden werden.

In der WO2009/064450 A1 wird eine Sonnenschutzzusammensetzung beschrieben, die bei landwirtschaftlichen Nutzpflanzen Verwendung finden kann. Die Zusammensetzung enthält Calciumcarbonat, welches zusammen mit Natriumbicarbonat in Wasser gelöst vorliegt.

In der DE 20 2006 002 479 U1 wird ein Additiv zur Hygienisierung, Desinfektion und Entsorgung fester, flüssiger oder gasförmiger Stoffe unter Verwendung gebrannter Kalk- und/oder Dolomiterzeugnisse in Verbindung mit biozid wirkenden Schwefelverbindungen beschrieben. Die biozide Wirkung des Additivs ist hierbei auf das Vorliegen der Schwefelverbindungen zurückzuführen. Das Additiv kann zur Vermeidung von Staubbildung entweder als Suspension vorliegen oder mit einer Zelluloseverbindung gecoatet sein.

Zumeist werden systemisch wirkende Biozide zur Behandlung bakterieller oder fungaler Infektionen an Kulturpflanzen eingesetzt, die zum Teil jedoch erhebliche Persistenzen aufweisen. Diese können zum Teil sogar in den Ernteprodukten und in den Futtermitteln oder Lebensmitteln nachgewiesen werden. Viele der bekannten Pflanzenbehandlungsmittel weisen nur eine geringe oder keine systemische Wirkung auf (beispielsweise Calcium, Kieselsäure), wobei viele dieser Stoffe insbesondere durch Witterungseinflüsse und Regen sehr schnell wieder von der Pflanzenoberfläche weggespült werden. Daher ist regelmäßig und in kurzen Abständen ein erneuter Auftrag bzw. eine Behandlung der Pflanze notwendig. Auch kommen zum Teil sehr hohe Konzentrationen dieser Stoffe zum Einsatz.

Der Einsatz von Kalk oder Elementarschwefel (entweder als Trockensubstanz oder als Suspension) weist bei den üblichen Behandlungsmethoden eine ungenügende Produkthaftung an den behandelten Pflanzenteilen oder tierischen Oberflächen auf, wodurch die Wirksamkeit der Wirksubstanzen sehr schnell abnimmt. Beispielsweise erfolgt bei einer Behandlung mit gelöschtem Kalk eine Rekarbonatisierung, was zu einer raschen Absenkung des pH-Wertes führt. Allerdings ist ein im alkalischen Bereich angesiedelter pH-Wert für eine Abwehr von biotischen Schaderregern besonders vorteilhaft, da eine direkte phytosanitäre oder biozide Wirkung eintritt. Eine Behandlung mit Kalk stärkt zudem indirekt das von der Pflanze aufgenommene gelöste Calcium, die Mittellamellen der Zellwände in Form des sich bildenden Calciumpektinats und ist aufgrund seiner entquellenden Wirkung membranstabilisierend.

Problematisch ist somit die für eine schonende Behandlung erforderliche kurzfristige physikalische Haftung von Kalk- oder Schwefelsuspensionen oder deren Gemischen auf der Oberfläche von Pflanzen und Tieren und die damit verbundene kurze Wirkzeit des Wirkstoffs, um eine ausreichende biozide Wirkung über einen längeren Zeitraum sicherzustellen, beispielsweise während witterungsbedingter mikrobieller Druckphasen in der Wachstumsphase. Zudem erfolgt eine Auswaschung durch Witterungseinflüsse oder Niederschlag, was die Aufnahme von Calcium oder Magnesium durch die Pflanze vermindert. Im Weinbau ist es beispielsweise während der Wachstumsphase erforderlich, eine Behandlung an jedem zweiten Tag durchzuführen, damit nicht neue Triebe von den Schaderregern angegriffen werden.

Ein ähnliches Problem tritt nicht nur bei Kulturpflanzen auf, die mit Pflanzenstärkungsmitteln behandelt werden, sondern auch bei der Vorbeugung oder Behandlung von Hauterkrankungen, insbesondere Klauenerkrankungen bei Huftieren. So werden Kalk oder kalkähnliche Verbindungen bei entzündlichen Schwellungen der Zehen von Rindern (Panaritium) oder Mortellaro eingesetzt. Diese Klauenerkrankungen basieren auf einer bakteriellen Infektion. Zur Vorbeugung und Behandlung von Klauenerkrankungen werden häufig Klauenbäder eingesetzt. Das Klauenbad besteht aus einer Wanne, in die ein Wirkstoffgemisch in Form einer Suspension eingebracht wird. Bei der Behandlung von Rindern besteht das Problem, dass bei einem Klauenbad der Kalk oder die kalkähnliche Verbindung sehr schnell wieder von den Zehen des Rindes abgespült oder abgerieben wird. Somit ist man auch bei tierischen Abschlussgeweben, wie z.B. den Zehen bzw. Klauen von Huftieren, mit dem gleichen Problem konfrontiert wie bei pflanzlichen Abschlussgeweben, da sowohl die pflanzlichen als auch tierischen Abschlussgewebe gute Besiedlungsorte für Mikroorganismen sind und damit nur eine geringe Affinität für eine Wirkstoffzusammensetzung bieten.

Vor diesem Hintergrund ist es Aufgabe der vorliegenden Erfindung, eine verbesserte Zusammensetzung bereitzustellen, bei der die Haftung und somit Wirkzeit eines auf Kalk bzw. einer kalkähnlichen Verbindung basierenden Wirkstoffgemisches erhöht und die Widerstandskraft der so behandelten Pflanze bzw. des Tieres gegenüber biotischen Schaderregern wie Bakterien, Pilzen oder Viren erhöht wird. Es ist ferner Aufgabe der vorliegenden Erfindung, eine alternative Suspension für die Behandlung oder Vorbeugung von Pflanzenkrankheiten bereitzustellen, deren Infektion pH-abhängig ist.

Diese Aufgaben werden gelöst durch eine wässrige Suspension mit den Merkmalen des Anspruchs 1 sowie deren Verwendung bei der Vorbeugung oder Behandlung von Klauenerkrankungen bei Nutztieren, oder zur Vorbeugung oder Behandlung von Pflanzenkrankheiten, die durch biotische Schaderreger wie Bakterien, Pilze, Viren oder eine Kombination dieser Erreger ausgelöst werden und deren Infektion pH-abhängig ist. Die vorliegende Erfindung hat es sich zum Ziel gemacht, ein Wirkstoffgemisch bereitzustellen, bei dem die Wirkzeit gegenüber biotischen Schaderregern bei Pflanzen oder Tieren verlängert werden kann, indem die Rekarbonatisierung des Calciumhydroxids und die damit verbundene Absenkung des pH-Wertes auf der behandelten pflanzlichen oder tierischen Oberfläche für eine verlängerte Zeitdauer im alkalischen Bereich aufrechterhalten wird. Üblicherweise werden auf Kalk basierende Suspensionen oder Trockensubstrate, die mit einem Lösungsmittel wie Wasser in Verbindung gebracht werden, schon nach kurzer Zeit von der Oberfläche der Pflanze oder der Klaue eines Huftieres weggewaschen oder abgerieben. Dadurch sinkt der pH-Wert über einen Zeitraum von wenigen Tagen, und je nach Umfeld gar innerhalb von Stunden, sehr schnell ab, was die Infektionsgefahr für die betreffende Pflanze oder das Tier durch das Fehlen einer natürlichen basenabhängigen Barriere drastisch erhöht. Eine Absenkung des pH-Wertes in den neutralen oder gar sauren Bereich ist daher für eine erfolgreiche Schaderregerabwehr unbedingt zu vermeiden. Bislang mussten die üblichen Wirkstoffzusammensetzungen oder Gemische in regelmäßigen kurzen zeitlichen Abständen in hohen Konzentrationen eingesetzt werden, um die betreffende Pflanze oder das Tier ausreichend zu behandeln und damit zu schützen. Schon bei einem pH-Wert < 10 erhöht sich die Infektionsgefahr durch Bakterien oder Pilze um einen signifikanten Faktor.

Um das Behandlungsintervall effektiv zu erhöhen, wird die erfindungsgemäße Zusammensetzung zur Behandlung der Pflanze, des Pflanzenbestandteils oder der Klaue eines Huftieres vorgeschlagen. Die Behandlung erfolgt über eine wässrige Suspension, die Kalk oder eine kalkähnliche Verbindung, ein Polysaccharid ausgewählt aus Cellulose oder einer von Cellulose abgeleiteten Verbindung, oder Stärke oder eine von Stärke abgeleitete Verbindung, oder ein Gemisch davon und Wasser als Lösungsmittel umfasst, wobei der pH-Wert der Zusammensetzung wenigstens 10 oder mehr beträgt.

Bei der von Cellulose abgeleiteten Verbindung handelt es sich erfindungsgemäß um eine Alkylcellulose, insbesondere Hydroxymethylcellulose, Hydroxyethylcellulose, Hydroxypropylcellulose, Hydroxypropylmethylcellulose, Methylcellulose, Ethylcellulose, Celluloseacetat, Cellulosephthalat, Cellulosenitrat, Carboxymethylcellulose. Vorzugsweise beträgt die Konzentration der Cellulose bzw. der von Cellulose abgeleiteten Verbindung in der Zusammensetzung 0,005 bis 10 Gew.-%, vorzugsweise zwischen 0,05 und 5 Gew.-%, vorzugsweise mehr als 1 Gew.-%.

Bei der von Stärke abgeleiteten Verbindung handelt es sich erfindungsgemäß um Amylose, Amylopektin, Dextrin oder Maltrin. Die Konzentration der Stärke bzw. der von Stärke abgeleiteten Verbindung beträgt vorzugsweise 0,01 bis 15 Gew.-%, vorzugsweise 0,1 bis 10 Gew.-%, vorzugsweise mehr als 1 Gew.-%.

Bei der kalkähnlichen Verbindung handelt es sich erfindungsgemäß um Calciumcarbonat, Calciumhydroxid, Magnesiumcarbonat oder Magnesiumhydroxid. Bevorzugt sind Calciumhydroxid und/oder Magnesiumhydroxyid. Diese Verbindungen werden auch als gelöschter Kalk, Kalkhydrat bezeichnet. Zur Herstellung der Suspension können auch gebrannte Kalke, die auch Branntkalk, Ätzkalk oder ungelöschter Kalk genannt werden, verwendet werden. Vorzugsweise beträgt die Konzentration des Kalks bzw. der kalkähnlichen Verbindung in der Zusammensetzung 1,0 bis 30 Gew.-%, vorzugsweise 2,5 bis 10 Gew.-%.

Zur Unterstützung der phytosanitären Wirkung kann der Wirkstoffzusammensetzung Elementarschwefel, Sulfatschwefel oder Sulfitschwefel zugegeben werden. Vorzugsweise beträgt die Schwefelkonzentration zwischen 0,1 und 15 Gew.-%. Der Anteil von Elementarschwefel in der Zusammensetzung ist abhängig von den zu reduzierenden Schadorganismen und dem tatsächlich vorliegenden Infektionsdruck. Bevorzugt sind wenigstens 0,5 Gew.-% Schwefel.

In einer bevorzugten Ausführungsform enthält die Zusammensetzung zusätzlich Kupfer, das eine fungizide Wirkung besitzt. Auch hier sind Konzentrationen von 0,05 bis 5 Gew.-% bevorzugt. Ferner ist auch eine Kombination dieses Elements mit anderen Elementen innerhalb der Zusammensetzung mit umfasst. Für Schwefel und Kupfer konnte gezeigt werden, dass die erfindungsgemäße Zusammensetzung die Wirksamkeit dieser Elemente hinsichtlich der Abwehr von biotischen Schaderregern synergistisch steigert.

Bei einer Zusammensetzung mit Calciumcarbonat als Kalk-Verbindung kann die Zusammensetzung zusätzlich Kohlenstoffdioxid bis zur Sättigung enthalten. Dadurch kann eine mechanische Barriere hergestellt werden und gleichzeitig eine Blattdüngung des behandelten Pflanzenbestandteils erfolgen.

Ferner können der Zusammensetzung Spurennährstoffe, vorzugsweise in Salz- oder Chelatform, zugegeben werden. Dazu gehören beispielsweise Bor, Eisen, Mangan, Molybdän, Kupfer oder Zink. Diese Stoffe können einzeln oder in deren Kombination vorliegen. Daneben kann die Zusammensetzung auch ein Pflanzenstärkungsmittel umfassen.

Da pflanzliche Abschlussgewebe (z.B. ein Blatt) häufig mit einer Wachsschicht überzogen sind, enthält die Zusammensetzung zur Verbesserung der Benetzung vorzugsweise zusätzlich ein Netzmittel, vorzugsweise ein biologisch abbaubares Netzmittel. Bei dem Netzmittel kann es sich beispielsweise um ein Tensid oder eine sonstige oberflächenaktive Substanz handeln. Vorzugsweise wird das Netzmittel in einer Konzentration von 0,05 bis 100 mg/l Suspension eingesetzt.

Zur Herstellung der alkalischen Suspension wird in einem ersten Schritt zunächst das Biopolymer, d.h. die Cellulose enthaltende Verbindung bzw. die Stärke enthaltende Verbindung oder einem Gemisch davon in der erforderlichen Konzentration angesetzt. Vorzugsweise werden 0,005 bis 10 Gew.-% der Cellulose bzw. der Cellulose-ähnlichen Verbindung (Derivat) eingesetzt. Anschließend lässt man das Gemisch für eine ausreichende Zeit quellen, wenigstens jedoch für zwei Stunden. Eine Quellzeit von etwa 24 Stunden ist bevorzugt. In einem zweiten Schritt wird der Kalk oder die kalkähnliche Verbindung (z.B. Calciumcarbonat, Calciumhydroxid, Magnesiumcarbonat, Magnesiumhydroxid) mit der Lösung unter ständigem Rühren vermengt. Gegebenenfalls können auch Schwefel und/oder Kupfer zugegeben werden.

Das Aufbringen der so erhaltenen wässrigen basischen Suspension auf die pflanzliche Oberfläche erfolgt vorzugsweise über ein Sprühverfahren. Als vorteilhaft hat sich ein Hochdruckspülverfahren erwiesen, bei dem die Zusammensetzung unter hohem Druck auf die Oberflächen der Pflanze gesprüht wird. Das Verfahren ermöglicht eine nahezu vollständige Benetzung der Pflanze bzw. der oberirdischen Pflanzenbestandteile mit der Wirkstoffzusammensetzung.

Bei der pflanzlichen Oberfläche handelt es sich vorzugsweise um ein Blatt, einen Stängel oder eine Wurzel, wobei vorzugsweise eine Behandlung von oberirdischen Pflanzenbestandteilen erfolgt. Tierische Oberflächen umfassen beispielsweise die Haut und insbesondere die Zehen bzw. Klauen bei Huftieren. Durch die erfindungsgemäße Zusammensetzung kann eine Vorbeugung oder Behandlung von Klauenerkrankungen bei Rindern erfolgen, indem auch hier die Haftung an der Oberfläche der Klaue erhöht wird. Dies führt dazu, dass die Wirksamkeit des Kalks oder der kalkähnlichen Verbindung, beispielsweise nach einem Klauenbad, prolongiert werden kann. Somit eignet sich die erfindungsgemäße Zusammensetzung beispielsweise zur Behandlung von Panaritium, Mortellaro (Dermatitis digitalis) oder Dermatitis interdigitalis.

Bei Pflanzen eignet sich das erfindungsgemäße Wirkstoffgemisch zur Vorbeugung oder Behandlung von Pflanzenkrankheiten, die durch biotische Schaderreger wie Bakterien, Pilze, Viren oder eine Kombination dieser Erreger ausgelöst werden und deren Infektion pH-abhängig ist.

Die erfindungsgemäße Zusammensetzung führt zu einer Stabilisierung der Kalksuspension und einer verlängerten Aufrechterhaltung eines alkalischen pH-Wertes, der wenigstens 10, vorzugsweise 10 bis 13 beträgt. Ferner wird die Haftung der Kalksuspension auf der Oberfläche der Pflanze oder der Klaue bei Huftieren erhöht. Dadurch konnten größere Behandlungsintervalle erreicht werden, wie sie auch bei einem Einsatz von systemisch wirkenden Bioziden üblich sind. Durch die Verwendung von Kalk oder einer kalkähnlichen Verbindung werden jedoch die Nachteile systemisch wirkender Biozide, insbesondere das Auftreten von Persistenzen, vermieden. Die erfindungsgemäße Suspension führt zu einer längeren Wirkdauer der Wirksubstanz und wirkt daher als Barriere gegen penetrierende biotische Schaderreger auf der pflanzlichen Oberfläche oder bei den Klauen von Huftieren. Aufgrund der verbesserten Haftung der erfindungsgemäßen basischen Leim-ähnlichen Lösung können bei Pflanzen zudem der Wiederaustrieb und der Blühbeginn, beispielsweise bei Obstgehölzen, gezielt verzögert werden. Ferner führt die erfindungsgemäße wässrige Suspension aufgrund ihrer verbesserten Haftung zu einer erhöhten Aufnahme von Calcium oder Magnesium über die Blattoberfläche und trägt dadurch zu einer Stabilisierung der Zellwände des Abschlussgewebes und Ausbildung des Chlorophylls bei.

Bevorzugt werden Cellulosen bzw. deren Derivate in der erfindungsgemäßen Zusammensetzung eingesetzt. Darüber hinaus können auch Stärken oder auf Stärken basierende Derivate zur Anwendung kommen. Einfachzucker, Kollagen und Gelatine haben sich aufgrund ihrer geringen biogenen Stabilität unter Freilandbedingungen als nur bedingt geeignet herausgestellt. Bevorzugte Cellulosederivate sind Alkylcellulosen, insbesondere Methylcellulose. Die Cellulosen bzw. Cellulosederivate werden in Konzentrationen von 0,005 bis 10 Gew.-% eingesetzt. Entsprechende Konzentrationen bei den Stärken bzw. den auf Stärken basierenden Derivaten umfassen Konzentrationen von 0,01 bis 15 Gew.-%.

Eine Möglichkeit zur Herstellung einer erfindungsgemäßen wässrigen Suspension umfasst die Vermengung der Biopolymere, d.h. der Cellulose bzw. der Cellulose enthaltenden Verbindung und/oder der Stärke bzw. der Stärke enthaltenden Verbindung mit einem Lösungsmittel (z.B. Wasser), gefolgt von der Zugabe des Kalks oder der kalkähnlichen Verbindung (z.B. Calciumhydroxid) in der gewünschten Konzentration. Die Konzentration der einzelnen Komponenten kann variiert werden und hängt vom jeweiligen Anwendungszweck ab. Eine phytosanitäre Pflanzenbehandlung erfordert eine veränderte Konzentrierung der einzelnen Komponenten als beispielsweise ein Obstbaumanstrich.

Die Erfindung wird in dem nachfolgenden Beispiel näher erläutert.

### Beispiel

Das nachfolgende Beispiel zeigt die verbesserte Haftwirkung und die verlängerte Aufrechterhaltung eines alkalischen pH-Wertes von pH > 10 unter Versuchsbedingungen. Ähnliche Ergebnisse wurden auch unter Freilandbedingungen mit Testpflanzen bzw. bei Behandlung der Klauen von Rindern erzielt.

Für den Versuch wurde 96 %iges Calciumhydroxid, Ca(OH)₂, und eine 1%ige CMC-Lösung eingesetzt. Hierzu wurde ein festgelegtes Volumen der 1 %igen CMC-Lösung in einem Gefäß bei 180 U/Min. und 10 Min. Rührzeit hergestellt. Anschließend erfolgte die Zugabe von 25 bzw. 50 g Ca(OH)₂ in 925 bzw. 950 g CMC-Leimlösung unter Rühren bei 180 U/Min. und einer Rührzeit von 3 Min. In gleicher Weise wurde mit der Kontrolle in reinem Wasser verfahren. Darauf erfolgte ein Eintrag einer 0,5 mm dicken Suspensionsschicht in Petrischalen. Die pH-Messungen wurden mit einer Flachmembranelektrode im Abstand von jeweils 12 Stunden vorgenommen. Es wurden 4 verschiedene Ansätze mit jeweils zwei Wiederholungen getestet:

| | |
|---|---|
| Ansatz 1: | 2,5 Gew.-% Ca(OH)₂ in Wassern (Kontrolle) |
| Ansatz 2: | 5,0 Gew.-% Ca(OH)₂ in Wasser (Kontrolle) |
| Ansatz 3: | 2,5 Gew.-% Ca(OH)₂ in 1 %iger CMC-Lösung |
| Ansatz 4: | 5,0 Gew.-% Ca(OH)₂ in 1 %iger CMC-Lösung |

Die Messung erfolgte an aufeinanderfolgenden Tagen zu den gekennzeichneten Uhrzeiten. Nachfolgende Tabelle 1 fasst die Versuchsergebnisse zusammen:

**Tabelle 1.**

| | | | Tag 1 | Tag 2 | Tag 2 | Tag 3 | Tag 3 | Tag 4 | Tag 4 | Tag 5 | Tag 5 | Tag 6 | Tag 6 | Tag 7 | Tag 7 |
|---|---|---|---|---|---|---|---|---|---|---|---|---|---|---|---|
| Behandl | Ca(OH)₂ | | Zeit | | | | | | | | | | | | |
| | Konz. | | 19:00 | 07:00 | 19:00 | 07:00 | 19:00 | 07:00 | 19:00 | 07:00 | 19:00 | 07:00 | 19:00 | 07:00 | 19:00 |
| Ans. 1 H₂O | #1 | 2,5 | 12,7 | 12,4 | 12,4 | 11,8 | 11,0 | 10,4 | 9,5 | 9,6 | 9,6 | 9,2 | 9,2 | 9,3 | 9,2 |
| | #2 | 2,5 | 12,6 | 12,5 | 12,4 | 11,7 | 11,4 | 9,9 | 9,6 | 9,6 | 9,5 | 9,4 | 9,1 | 9,2 | 9,2 |
| | | | 12,65 | 12,45 | 12,40 | 11,75 | 11,20 | 10,15 | 9,55 | 9,60 | 9,55 | 9,30 | 9,15 | 9,25 | 9,20 |
| | | | | | | | | | | | | | | | |
| Ans. 2 H₂O | #1 | 5 | 12,7 | 12,7 | 12,5 | 11,8 | 11,4 | 10,9 | 10,2 | 9,8 | 9,6 | 9,3 | 9,2 | 9,2 | 9,2 |
| | #2 | 5 | 12,8 | 12,6 | 12,4 | 11,8 | 11,4 | 10,8 | 10,2 | 9,9 | 9,6 | 9,4 | 9,2 | 9,2 | 9,1 |
| | | | 12,75 | 12,65 | 12,45 | 11,80 | 11,40 | 10,85 | 10,20 | 9,85 | 9,60 | 9,35 | 9,20 | 9,20 | 9,15 |
| | | | | | | | | | | | | | | | |
| Ans. 3 CMC | #1 | 2,5 | 12,5 | 12,6 | 12,6 | 12,5 | 12,2 | 11,9 | 11,4 | 10,8 | 10,4 | 9,9 | 9,7 | 9,5 | 9,5 |
| | #2 | 2,5 | 12,6 | 12,7 | 12,5 | 12,5 | 12,0 | 11,8 | 11,2 | 10,9 | 10,5 | 10,2 | 9,4 | 9,4 | 9,3 |
| | | | 12,55 | 12,65 | 12,55 | 12,50 | 12,10 | 11,85 | 11,30 | 10,85 | 10,45 | 10,05 | 9,55 | 9,45 | 9,40 |
| | | | | | | | | | | | | | | | |
| Ans. 4 CMC | #1 | 5 | 12,7 | 12,6 | 12,6 | 12,5 | 12,3 | 11,9 | 11,4 | 11,1 | 10,6 | 10,2 | 9,7 | 9,4 | 9,4 |
| | #2 | 5 | 12,6 | 12,6 | 12,6 | 12,4 | 12,2 | 11,9 | 11,3 | 10,9 | 10,6 | 10,3 | 9,8 | 9,5 | 9,5 |
| | | | 12,65 | 12,60 | 12,60 | 12,45 | 12,25 | 11,90 | 11,35 | 11,00 | 10,6 | 10,25 | 9,75 | 9,45 | 9,45 |

| | | | | | | | | | | | | | | | |
|---|---|---|---|---|---|---|---|---|---|---|---|---|---|---|---|
| # Versuchsnummer Ans. = Ansatz Konz. in Gew.-% | | | | | | | | | | | | | | | |

Die Tabelle 1 veranschaulicht deutlich, dass bei den Kontrollen schon nach kurzer Zeit eine deutliche Abnahme des pH-Wertes erfolgt. Bereits nach dem dritten Tag liegt der pH-Wert unterhalb von 10, so dass eine nach herkömmlicher Verfahrensweise behandelte Pflanze anfällig für eine Infektion mit biotischen Schaderregern wäre. Dahingegen erfolgt die pH-Abnahme bei der erfindungsgemäßen wässrigen Lösung (Ansätzen 3 und 4) weit langsamer. Diese Versuche wurden im Freiland bei lebenden Pflanzen bestätigt, und man konnte bis zum fünften Tag einen pH-Wert von > 10 und damit eine erhöhte Abwehrfähigkeit der Pflanzen im Freiland feststellen. Ähnliche Ergebnisse zeigt auch eine Behandlung von Klauen bei Rindern.

Diese Ergebnisse zeigen, dass mit der erfindungsgemäßen alkalischen wässrigen Zusammensetzung eine verlängerte Aufrechterhaltung des pH-Wertes auf einer pflanzlichen oder tierischen Oberfläche möglich ist. Die Aufrechterhaltung eines alkalischen pH-Wertes erhöht die Widerstandskraft der Pflanze, insbesondere von Nutz- und Zierpflanzen gegenüber biotischen Schaderregern. Auch die Wirkung unterschiedlicher Kalke oder kalkähnlicher Verbindungen bei der Behandlung einer Klauenerkrankung bei Huftieren, insbesondere bei Rindern, ist durch eine verlängerte Anhaftung der Wirkkomponenten möglich.

Im Bereich des Pflanzenschutzes führen verlängerte Behandlungsintervalle zu erheblich verringerten Kosten. Der Einsatz von Wirkstoffzusammensetzungen kann dadurch erheblich vermindert werden. Dasselbe gilt auch für den Einsatz systemisch wirkender Pflanzenschutzmittel.

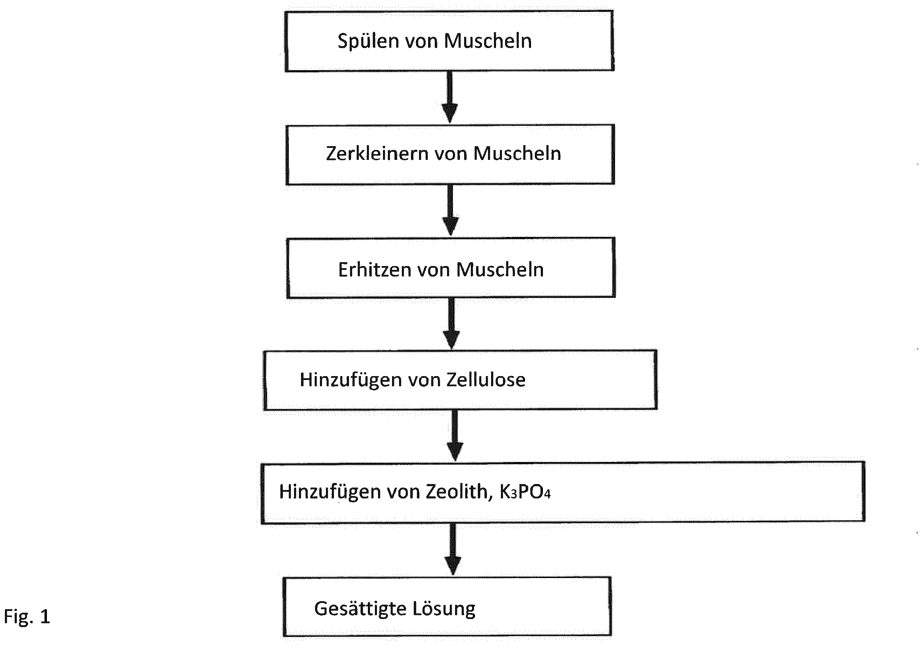

## Patentansprüche

1. Wässrige Suspension zur Verwendung bei der Vorbeugung oder Behandlung von Klauenerkrankungen bei Nutztieren, insbesondere zur Behandlung von Panaritium, Montellaro oder Dermatitis interdigitalis, umfassend:
- Kalk, oder eine kalkähnliche Verbindung, ausgewählt aus der Gruppe bestehend aus Calciumcarbonat, Calciumhydroxid, Magnesiumcarbonat oder Magnesiumhydroxid,
- ein Polysaccharid ausgewählt aus Cellulose, oder einer von Cellulose abgeleiteten Verbindung, ausgewählt aus der Gruppe bestehend aus Alkylcellulose, Hydroxymethylcellulose, Hydroxyethylcellulose, Hydroxypropylcellulose, Hydroxypropylmethylcellulose, Methylcellulose, Ethylcellulose, Celluloseacetat, Cellulosephthalat, Cellulosenitrat, Carboxymethylcellulose, oder Stärke, oder einer von Stärke abgeleiteten Verbindung, ausgewählt aus der Gruppe bestehend aus Amylose, Amylopektin, Dextrin, Maltrin, oder einem Gemisch davon,
- Wasser als Lösungsmittel, wobei der pH-Wert der Zusammensetzung wenigstens 10 oder mehr beträgt.

2. Wässrige Suspension nach Anspruch 1, **dadurch gekennzeichnet, dass** die Konzentration der Cellulose bzw. der von Cellulose abgeleiteten Verbindung in der Zusammensetzung 0,005 bis 10 Gew.-% beträgt.

3. Wässrige Suspension nach Anspruch 1, **dadurch gekennzeichnet, dass** die Konzentration der Stärke bzw. der von Stärke abgeleiteten Verbindung 0,01 bis 15 Gew.-% beträgt.

4. Wässrige Suspension nach Anspruch 1, **dadurch gekennzeichnet, dass** die Konzentration von Calciumhydroxid oder Magnesiumhydroxid in der Zusammensetzung 1,0 bis 30 Gew.-%, vorzugsweise 2,5 bis 10 Gew.-% beträgt.

5. Wässrige Suspension nach einem der Ansprüche 1 bis 4, **dadurch gekennzeichnet, dass** die Zusammensetzung ferner 0,1 bis 15 Gew.-% Schwefel, 0,3 bis 10 Gew.-% Kalium und/oder 0,3 bis 10 Gew.-% Phosphat enthält.

6. Verwendung einer wässrigen Suspension, umfassend:
- Calciumhydroxid,
- ein Polysaccharid ausgewählt aus Cellulose oder einer von Cellulose abgeleiteten Verbindung, ausgewählt aus der Gruppe bestehend aus Alkylcellulose, Hydroxymethylcellulose, Hydroxyethylcellulose, Hydroxypropylcellulose, Hydroxypropylmethylcellulose, Methylcellulose, Ethylcellulose, Celluloseacetat, Cellulosephthalat, Cellulosenitrat, Carboxymethylcellulose, oder Stärke oder einer von Stärke abgeleiteten Verbindung, ausgewählt aus der Gruppe bestehend aus Amylose, Amylopektin, Dextrin, Maltrin, oder einem Gemisch davon,
- Wasser als Lösungsmittel, wobei der pH-Wert der Zusammensetzung wenigstens 10 oder mehr beträgt,
zur Vorbeugung oder Behandlung von Pflanzenkrankheiten, die durch biotische Schaderreger wie Bakterien, Pilze, Viren oder eine Kombination dieser Erreger ausgelöst werden und deren Infektion pH-abhängig ist.

7. Verwendung nach Anspruch 6, **dadurch gekennzeichnet, dass** ein Aufbringen der wässrigen Suspension auf einer pflanzlichen Oberfläche erfolgt, wobei es sich bei der pflanzlichen Oberfläche um ein Blatt, einen Stängel oder eine Wurzel handelt.

8. Verwendung nach Anspruch 6 oder 7, **dadurch gekennzeichnet, dass** die Zusammensetzung zur Verbesserung der Benetzung des pflanzlichen Abschlussgewebes zusätzlich ein biologisch abbaubares Netzmittel enthält.

9. Verfahren zur Vorbeugung oder Behandlung von Pflanzenkrankheiten, die durch biotische Schaderreger wie Bakterien, Pilze, Viren oder eine Kombination dieser Erreger ausgelöst werden und deren Infektion pH-abhängig ist, **dadurch gekennzeichnet, dass** die Pflanze oder ein Pflanzenteil mit einer wässrigen Suspension behandelt wird, indem die Suspension auf die Pflanze oder das Pflanzenteil aufgebracht wird, wobei die wässrige Suspension umfasst:
- Calciumhydroxid,
- ein Polysaccharid ausgewählt aus Cellulose, oder einer von Cellulose abgeleiteten Verbindung, ausgewählt aus der Gruppe bestehend aus Alkylcellulose, Hydroxymethylcellulose, Hydroxyethylcellulose, Hydroxypropylcellulose, Hydroxypropylmethylcellulose, Methylcellulose, Ethylcellulose, Celluloseacetat, Cellulosephthalat, Cellulosenitrat, Carboxymethylcellulose, oder Stärke, oder einer von Stärke abgeleiteten Verbindung, ausgewählt aus der Gruppe bestehend aus Amylose, Amylopektin, Dextrin, oder einem Gemisch davon,
- Wasser als Lösungsmittel, wobei der pH-Wert der Zusammensetzung wenigstens 10 oder mehr beträgt.

10. Verfahren nach Anspruch 9, **dadurch gekennzeichnet, dass** das Aufbringen der wässrigen Suspension auf die pflanzliche Oberfläche über ein Sprühverfahren erfolgt.

## Claims

1. Aqueous suspension for use in the prevention or treatment of claw diseases in useful animals, in particular for treatment of interdigital phlegmon, digital dermatitis or interdigital dermatitis, comprising:
- lime, or a lime-like compound, selected from the group consisting of calcium carbonate, calcium hydroxide, magnesium carbonate and magnesium hydroxide,
- a polysaccharide selected from cellulose, or a cellulose-derived compound, selected from the group consisting of alkylcellulose, hydroxymethylcellulose, hydroxyethylcellulose, hydroxypropylcellulose, hydroxypropylmethylcellulose, methylcellulose, ethylcellulose, cellulose acetate, cellulose phthalate, cellulose nitrate and carboxymethylcellulose, or starch, or a starch-derived compound, selected from the group consisting of amylose, amylopectin, dextrin and maltrin, or a mixture thereof,
- water as a solvent, the pH of the composition being at least 10 or greater.

2. Aqueous suspension according to Claim 1, **characterized in that** the concentration of the cellulose or the cellulose-derived compound in the composition is 0.005% to 10% by weight.

3. Aqueous suspension according to Claim 1, **characterized in that** the concentration of the starch or the starch-derived compound is 0.01% to 15% by weight.

4. Aqueous suspension according to Claim 1, **characterized in that** the concentration of calcium hydroxide or magnesium hydroxide in the composition is 1.0% to 30% by weight, preferably 2.5% to 10% by weight.

5. Aqueous suspension according to any of Claims 1 to 4, **characterized in that** the composition furthermore contains 0.1% to 15% by weight of sulfur, 0.3% to 10% by weight of potassium and/or 0.3% to 10% by weight of phosphate.

6. Use of an aqueous suspension comprising:
- calcium hydroxide,
- a polysaccharide selected from cellulose or a cellulose-derived compound, selected from the group consisting of alkylcellulose, hydroxymethylcellulose, hydroxyethylcellulose, hydroxypropylcellulose, hydroxypropylmethylcellulose, methylcellulose, ethylcellulose, cellulose acetate, cellulose phthalate, cellulose nitrate and carboxymethylcellulose, or starch or a starch-derived compound, selected from the group consisting of amylose, amylopectin, dextrin and maltrin, or a mixture thereof,
- water as a solvent, the pH of the composition being at least 10 or greater,
for prevention or treatment of plant diseases which are caused by biotic damaging pathogens such as bacteria, fungi, viruses or a combination of said pathogens and the infection of which is pH-dependent.

7. Use according to Claim 6, **characterized in that** the aqueous suspension is applied to a plant surface, said plant surface being a leaf, a stem or a root.

8. Use according to Claim 6 or 7, **characterized in that** the composition additionally contains a biodegradable wetting agent to improve the wetting of the plant protective tissue.

9. Method for preventing or treating plant diseases which are caused by biotic damaging pathogens such as bacteria, fungi, viruses or a combination of said pathogens and the infection of which is pH-dependent, **characterized in that** the plant or a plant part is treated with an aqueous suspension by application of the suspension to the plant or the plant part, said aqueous suspension comprising:
- calcium hydroxide,
- a polysaccharide selected from cellulose, or a cellulose-derived compound, selected from the group consisting of alkylcellulose, hydroxymethylcellulose, hydroxyethylcellulose, hydroxypropylcellulose, hydroxypropylmethylcellulose, methylcellulose, ethylcellulose, cellulose acetate, cellulose phthalate, cellulose nitrate and carboxymethylcellulose, or starch, or a starch-derived compound, selected from the group consisting of amylose, amylopectin and dextrin, or a mixture thereof,
- water as a solvent, the pH of the composition being at least 10 or greater.

10. Method according to Claim 9, **characterized in that** the aqueous suspension is applied to the plant surface via a spray method.

## Revendications

1. Suspension aqueuse pour une utilisation la prévention ou le traitement de maladies des onglons du bétail, en particulier au traitement du Panaritium, du Montellaro ou de la dermatite interdigitale, comprenant :
- de la chaux, ou un composé analogue à la chaux, choisi dans le groupe consistant en le carbonate de calcium, l'hydroxyde de calcium, le carbonate de magnésium ou l'hydroxyde de magnésium,
- un polysaccharide choisi parmi la cellulose, ou un composé dérivé de la cellulose, choisi dans le groupe consistant en une alkylcellulose, l'hydroxyméthylcellulose, l'hydroxyéthylcellulose, l'hydroxypropylcellulose, l'hydroxypropylméthylcellulose, la méthylcellulose, l'éthylcellulose, l'acétate de cellulose, le phtalate de cellulose, le nitrate de cellulose, la carboxyméthylcellulose, ou l'amidon, ou un composé dérivé de l'amidon, choisi dans le groupe consistant en l'amylose, l'amylopectine, la dextrine, la maltrine ou un mélange de celles-ci,
- de l'eau en tant que solvant, le pH de la composition étant d'au moins 10 ou plus.

2. Suspension aqueuse selon la revendication 1, **caractérisée en ce que** la concentration de la cellulose ou du composé dérivé de la cellulose dans la composition est de 0,005 à 10 % en poids.

3. Suspension aqueuse selon la revendication 1, **caractérisée en ce que** la concentration de l'amidon ou du composé dérivé de l'amidon est de 0,01 à 15 % en poids.

4. Suspension aqueuse selon la revendication 1, **caractérisée en ce que** la concentration de l'hydroxyde de calcium ou de l'hydroxyde de magnésium dans la composition est de 1,0 à 30 % en poids, de préférence de 2,5 à 10 % en poids.

5. Suspension aqueuse selon l'une des revendications 1 à 4, **caractérisée en ce que** la composition contient en outre 0,1 à 15 % en poids de soufre, 0,3 à 10 % en poids de potassium et/ou 0,3 à 10 % en poids de phosphate.

6. Utilisation d'une suspension aqueuse comprenant :
- de l'hydroxyde de calcium,
- un polysaccharide choisi parmi la cellulose, ou un composé dérivé de la cellulose, choisi dans le groupe consistant en une alkylcellulose, l'hydroxyméthylcellulose, l'hydroxyéthylcellulose, l'hydroxypropylcellulose, l'hydroxypropylméthylcellulose, la méthylcellulose, l'éthylcellulose, l'acétate de cellulose, le phtalate de cellulose, le nitrate de cellulose, la carboxyméthylcellulose, ou l'amidon, ou un composé dérivé de l'amidon, choisi dans le groupe consistant en l'amylose, l'amylopectine, la dextrine, la maltrine ou un mélange de celles-ci,
- de l'eau en tant que solvant, le pH de la composition étant d'au moins 10 ou plus,
pour la prévention ou le traitement de maladies des plantes, qui sont déclenchées par des agents pathogènes biotiques tels que des bactéries, des champignons, des virus ou une combinaison de ces agents pathogènes, et dont l'infection dépend du pH.

7. Utilisation selon la revendication 6, **caractérisée en ce qu'**on procède à une application de la suspension aqueuse sur une surface végétale, pour laquelle, pour ce qui concerne la surface végétale, il s'agit d'une feuille, d'une tige ou d'une racine.

8. Utilisation selon la revendication 6 ou 7, **caractérisée en ce que** la composition contient en outre, pour améliorer le mouillage du tissu végétal superficiel, un mouillant biodégradable.

9. Procédé pour la prévention ou le traitement de maladies des plantes qui sont déclenchées par des agents pathogènes biotiques tels que des bactéries, des champignons, des virus ou une combinaison de ces agents pathogènes, et dont l'infection dépend du pH, **caractérisé en ce que** la plante ou une partie de la plante est traitée par une suspension aqueuse, la suspension étant appliquée sur la plante ou la partie de plante, la suspension aqueuse comprenant :
- de l'hydroxyde de calcium,
- un polysaccharide choisi parmi la cellulose, ou un composé dérivé de la cellulose, choisi dans le groupe consistant en une alkylcellulose, l'hydroxyméthylcellulose, l'hydroxyéthylcellulose, l'hydroxypropylcellulose, l'hydroxypropylméthylcellulose, la méthylcellulose, l'éthylcellulose, l'acétate de cellulose, le phtalate de cellulose, le nitrate de cellulose, la carboxyméthylcellulose, ou l'amidon, ou un composé dérivé de l'amidon, choisi dans le groupe consistant en l'amylose, l'amylopectine, la dextrine, la maltrine ou un mélange de celles-ci,
- de l'eau en tant que solvant, le pH de la composition étant d'au moins 10 ou plus.

10. Procédé selon la revendication 9, **caractérisé en ce que** l'application de la suspension aqueuse sur la surface végétale est effectuée par un procédé par pulvérisation.
